# EUROPÄISCHE PATENTSCHRIFT

(11) **EP 2 114 700 B1**
(45) Veröffentlichungstag und Bekanntmachung des Hinweises auf die Patenterteilung: **27.07.2011**
(21) Anmeldenummer: 07821169.5
(22) Anmeldetag: 11.10.2007
(51) Int. Cl.: B60C 15/02, B60C 15/06

(54) **FAHRZEUGLUFTREIFEN MIT NOTLAUFEIGENSCHAFTEN**
RUN-FLAT PNEUMATIC VEHICLE TYRE
BANDAGE PNEUMATIQUE POUR VÉHICULE DOTÉ DE PROPRIÉTÉS DE ROULAGE DE SECOURS

(30) Priorität: 29.11.2006 DE 102006056310
(43) Veröffentlichungstag der Anmeldung: 11.11.2009
(73) Patentinhaber: Continental Reifen Deutschland GmbH, 30165 Hannover (DE)
(72) Erfinder: KENDZIORRA, Norbert, 30827 Garbsen (DE); JOSHI, Ujwal Raj, 30419 Hannover (DE)
(74) Vertreter: Finger, Karsten
(86) Internationale Anmeldenummer: PCT/EP2007/060802
(87) Internationale Veröffentlichungsnummer: WO 2008/064947

(56) Entgegenhaltungen:
- EP-A- 0 422 605
- JP-A- 2 171 308
- KR-A- 20030 061 905

## Beschreibung

Fahrzeugluftreifen mit Notlaufeigenschaften mit einem profilierten Laufstreifen, einem Gürtelverband, einer luftdicht ausgeführten Innenschicht, einer zumindest einlagigen Karkasse, Seitenwänden mit zumindest je einem im Bereich jeder Seitenwand eingebrachten, im Querschnitt mondsichelförmigen Verstärkungsprofil, welches sich jeweils zumindest über einen Großteil der Seitenwandlänge erstreckt, Wulstbereichen mit Wulstkernen und Wulstprofilen, wobei wenigstens ein zumindest unterhalb der Wulstkerne angeordneter Wulststreifen den Reifenfuß bildet, welcher im Zusammenspiel mit einer Felgensitzfläche den Sitz des Reifens auf der Felge gewährleistet.

Derartige im Pannenfall selbstragende Fahrzeugluftreifen sind in unterschiedlichen Ausführungen schon seit längerem bekannt. Die im Bereich der Seitenwände des Reifens eingebauten Verstärkungsprofile werden bezüglich ihrer Querschnittsform und bezüglich diverser Eigenschaften ihrer elastomeren Mischung derart ausgeführt, dass sie in der Lage sind, den Reifen bei einem plötzlichen Druckverlust, also im Pannenfall, über eine gewisse Zeit bzw. über eine gewisse Laufstrecke selbstragend zu erhalten, so dass eine Weiterfahrt ermöglicht ist. Ein selbstragender Reifen der eingangs genannten Art ist beispielsweise aus der DE 29 43 654 A1 bekannt. Der Reifen ist im Bereich seiner Seitenwände jeweils mit einem ein- oder mehrteiligen, im Querschnitt etwa mondsichelförmigen Verstärkungsprofil versehen, welches zwischen der Innenschicht und der Karkasslage angeordnet ist und bis unterhalb des Gürtels und bis in die Nähe der Wulstbereiche verläuft.

Das Seitenwand-Verstärkungsprofil, auch SSR-Insert (self supporting runflat-insert) genannt, eines im Pannenfall selbstragenden Reifens ist in der Regel aus einer harten Gummimischung gebildet, damit der Reifen auch ohne Luft über eine bestimmte Distanz gefahren werden kann und nicht vollständig einfällt. Bei Druckluftverlust wird die Selbstragefähigkeit des Notlaufreifens dadurch erreicht, dass das in der Reifenseitenwand angeordnete Insert auf Kompression beansprucht wird, während die an dem Insert anliegende Karkasse auf Zug beansprucht wird. Durch dieses Zusammenwirken von Karkasse und Insert wird der Reifen selbstragend und der Sitz des Reifenfußes auf der Felge bleibt erhalten. Die Streckenlänge, über die der Sitz des Reifens auf der Felge erhalten bleibt, hat sich jedoch als verbesserungswürdig herausgestellt. Denn die auf den Reifen wirkenden Kräfte im Notlauf sind enorm hoch. So ist es problematisch, den Reifen im Notlauf über eine von der Fachwelt geforderten längeren Fahrtstrecke selbstragend zu erhalten. Einerseits ermüdet das Insertmaterial im Notlauf, andererseits rutschen die Reifenfüße vom Felgensitz herunter, so dass sich der Reifen von der Felge loslöst. Es ist gefordert, dass der Reifen auch im Notlaufbetrieb über eine längere Fahrtstrecke zuverlässig auf der Felge sitzt, zudem ist gefordert, dass die Fahreigenschaften im Normalbetrieb so wenig wie möglich gegenüber herkömmlichen Reifen ohne Notlaufeigenschaften, insbesondere hinsichtlich der Einfederungseigenschaften beeinträchtigt sind.

Aus der EP-A-422 605 ist ein Fahrzeugluftreifen ohne Notlaufeigenschaften bekannt geworden, dessen Reifenfuß zur Verbesserung des Klemmsitzes des Reifenfußes auf dem Felgensitz eine äußere Gummilage aus einer weichen Gummimischung mit einer JIS Härte zwischen 50 und 65 aufweist.

Es ist ebenfalls bekannt, für einen verbesserten Sitz eines vorbeschriebenen Notlaufreifens, insbesondere des Reifenfußes auf der Felge einen Wulstkern mit einer erhöhten Anzahl an Drahtkernen zu verwenden. Die Verwendung eines derartigen Wulstkernes erfordert einen vermehrten Materialeinsatz und verteuert somit den Reifen, während der Reifen insgesamt ein höheres Gewicht bekommt, welches sich negativ auf seine Fahreigenschaften auswirkt. Es ist ebenfalls bekannt, im Bereich des Wulstes sog. "Chafer", Festigkeitsträger aufweisende Festigkeitsträgerlagen, einzusetzen, die die Fußregion des Reifens gegen u.a. ein Abrutschen des Reifens von der Felge versteifen sollen. Aber auch der Einsatz von Chafem erhöht die Produktionskosten.

Es ist die Aufgabe der Erfindung einen kostengünstigen Notlaufreifen bereitzustellen, der im Notlauf über eine relativ lange Fahrstrecke durch seinen zuverlässigen Sitz auf der Felge selbstragend erhalten bleibt und dessen Einfederungseigenschaften verbessert sind.

Die Aufgabe wird gelöst, indem der Reifenfuß zumindest radial unterhalb des Kernes auf seiner der Felgensitzfläche zugewandten äußeren und auf der Felgensitzfläche aufliegenden Fläche zur Erhöhung der Reibhaftung zwischen Reifenfuß und Felge aus einer weichen Gummimischung besteht, welche eine Shore-A-Härte kleiner 70 aufweist.

Erfindungswesentlich ist, dass der Felgensitz im Notlauf zur Erhaltung einer längeren Notlaufstrecke dahingehend verbessert ist, dass durch die weiche Gummimischung die Reibhaftung zwischen der Felge und dem Reifenfuß verstärkt ist. Denn die weiche Gummimischung ist in der Lage, die Mikrorauhigkeit der Felgenoberfläche aufzunehmen, so dass quasi eine Verzahnung zwischen der Mikrorauhigkeit der Felgenoberfläche und der auf der Felgenoberfläche aufsitzenden weichen Gummimischung des Reifenfußes erfolgt. Die Reibhaftung ist gegenüber einer bisher üblichen harten Gummimischung (Härte: ca. 75-85 Shore A) im Fußbereich verbessert, so dass das sog. "Rim Roll Off", das Abrutschen des Reifens von dem Felgensitz, verzögert ist. Eine längere Notlaufstrecke des Notlaufreifens ist erhaltbar. Weiterhin ist erreicht, dass durch den Einsatz einer weichen Gummimischung, welche sich im Fußbereich über die gesamte axiale Breite des Fußbereiches erstreckt, die Einfederungseigenschaften trotz der verdickten Seitenwände des Reifens verbessert sind. Denn die weiche Gummimischung wirkt wie ein Kissen bzw. ein Puffer.

In einer bevorzugten Ausführungsform ist die radial innen am Reifenfuß angeordnete weiche Gummimischung eine Gummiauflage, welche sich radial innen über die gesamte axiale Breite des Reifenfußbereiches erstreckt und die radial innere Oberfläche des Reifenfußes, welcher mit dem Felgensitz in Berührung kommt, bildet. Im Reifenquerschnitt betrachtet weist diese Lage aus weicher Gummimischung wenigstens eine in etwa konstante Dicke von wenigstens etwa 0,5mm bis maximal etwa 1,0mm auf. Zwischen dem Kern und der radial innen, unterhalb des Kerns von diesem beabstandet gelegenen Lage aus weicher Gummimischung können eine oder mehrere Lagen aus einer härteren oder andere Eigenschaften aufweisenden Gummimischung und optional Festigkeitsträger angeordnet sein. Durch eine derartige Ausführung des Wulstbereiches ist eine ausreichende Festigkeit des Wulstbereiches gewahrt, es sind aber auch die Reibhaftung und die Einfederung verbessert.

In einer anderen Ausführungsform besteht der gesamte Reifenfuß, also der Bereich von dem radial innen gelegenen Fußbereich bis zum radial oberhalb des Fußbereiches gelegenen Kerns aus der weichen Gummimischung. Die Einfederungseigenschaften sind besonders gut. Zur gezielten Versteifung können zusätzlich Festigkeitsträgerlagen im Wulstbereich angeordnet sein.

Besonders effizient wird die o.g. Aufgabe gelöst, indem die Shore-A-Härte der weichen Gummimischung in den vorgeschlagenen Ausführungsformen etwa 57 beträgt.

Bei den vorgenannten Ausführungsformen kann die weiche Gummimischung zusätzlich auf ihrer dem Felgensitz zugewandten Fläche Rauhigkeiten aufweisen, durch die die Reibhaftung weiter verbesserbar ist. Hierbei ist die Rauhtiefe bevorzugt kleiner als 0,5mm. Die Rauhigkeiten sind Erhebungen- und/oder Vertiefungen der äußeren Gummioberfläche, die geometrische Muster sein können.

Die Anordnung der weichen Gummilage bzw. Gummiauflage im Fußbereich ist in verschiedenen Ausführungsformen unterschiedlich. In einer Ausführungsform ist die Lage aus der weichen Gummimischung nur auf der radial äußeren Fläche des Fußbereiches radial unterhalb des Kernes liegend, angeordnet. In einer anderen Ausführungsform ist die Lage aus der weichen Gummimischung auf der radial äußeren Fläche unterhalb des Kernes und ein- oder beidseitig axial innen und/oder axial außen an den äußeren Fußbereichen bis in eine radiale Höhe, die im Bereich des Apex liegt, angeordnet.

Weitere Merkmale, Vorteile und Einzelheiten der Erfindung werden anhand der Zeichnungen, die schematische Ausführungsbeispiele darstellen, näher erläutert. Es zeigen die:
- Fig. 1: einen Teilquerschnitt eines SSR-Notlaufreifens;
- Fig. 2: einen vergrößerten Ausschnitt des Wulstbereichesquerschnittes der Ausführungsform der Fig. 1;
- Fig. 3: einen Querschnitt des auf einer Felge angeordneten Wulstbereiches und einen vergrößerten Ausschnitt der Auflagefläche zwischen Felgensitz und Reifenfuß;
- Fig. 4: einen Querschnitt des Wulstbereiches einer anderen Ausführungsform;
- Fig. 5: einen Querschnitt des Wulstbereiches einer weiteren Ausführungsform.

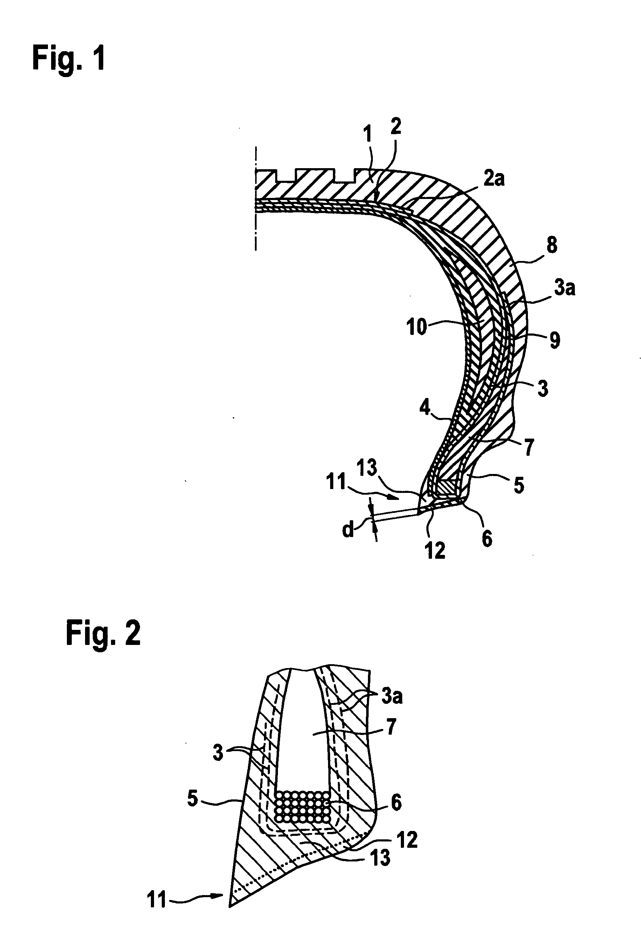

Gemäß dem in **Fig. 1** gezeigten Teilquerschnitt durch einen SSR-Radialreifen für Personenkraftwagen sind die wesentlichen Bestandteile, aus welchen sich der dargestellte Radialreifen zusammensetzt: ein profilierter Laufstreifen 1, ein bei der gezeigten Ausführung aus zwei Lagen 2a bestehender Gürtel 2, eine insbesondere einlagig ausgeführte Karkasse 3, eine weitgehend luftdicht ausgeführte Innenschicht 4, Wülste 5 mit Wulstkernen 6 und Wulstkernprofilen 7, sowie Seitenwände 8 und etwa mondsichelförmige Verstärkungsprofile 9,10. Das Verstärkungsprofil 9,10 besteht hier aus zwei unterschiedlichen Gummimischungen: einem inneren Profil 10 und einem äußeren Profil 9, welches das innere Profil 10 umschließt. Das Verstärkungsprofil 9,10 kann aber auch aus nur einer Gummimischung bestehen. "SSR" steht für "Self Support Runflat Tire" und bezeichnet Fahrzeugluftreifen mit Notlaufeigenschaften aufgrund verstärkter Seitenwände. Die beiden Lagen 2a des Gürtels 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2a orientiert sind und mit der Reifenumfangsrichtung jeweils einen Winkel zwischen 20° und 35° einschließen. Auch die Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Karkasse 3 ist um die Wulstkerne 6 von innen nach außen geführt, ihre Hochschläge 3a verlaufen neben den Wulstkernprofilen 7 in Richtung Gürtel 2. Das aus elastomerem Material, insbesondere aus einer Kautschukmischung, hergestellte Verstärkungsprofil 9,10 ist während des Aufbaus des Reifens auf der Innenschicht 4 positioniert worden und befinden sich daher zwischen dieser und der Karkasse 3. Die Dicke des Verstärkungsprofils 9,10 nimmt sowohl Richtung Gürtel 2 als auch Richtung Wulst 5 ab. Richtung Gürtel 2 reicht das Verstärkungsprofil 9 bis unter die Randbereiche desselben. Richtung Wulst 5 endet das Verstärkungsprofil 9 knapp oberhalb des Wulstkernes 6. Über den überwiegenden Bereich der Länge der Seitenwand ist das Verstärkungsprofil 9 nahezu konstant dick ausgeführt, seine Stärke beträgt 6 bis 15mm. Die Wülste 5 weisen in ihrem Fußbereich 11, das ist der radial innen gelegene Wulstbereich, der mit dem Felgensitz der Felge (nicht dargestellt) korrespondiert, zumindest radial unterhalb des Kernes 6 auf der der Felgensitzfläche zugewandten äußeren und auf der Felgensitzfläche 15 aufliegenden Fläche zur Erhöhung der Reibhaftung zwischen Reifenfuß 11 und Felge 14 eine umlaufende Lage 12 aus einer weichen Gummimischung mit einer Shore-A-Härte von etwa 57 auf. Durch die Anordnung der aus einer weichen Gummimischung bestehenden Lage 12 ist der Felgensitz im Notlauf zur Erhaltung einer längeren Notlaufstrecke dahingehend verbessert ist, dass durch die weiche Gummimischung die Reibhaftung zwischen der Felge 15 und dem Reifenfuß 11 verbessert ist. Die weiche Gummimischung nimmt die Mikrorauhigkeit der Felgenoberfläche auf, so dass quasi eine Verzahnung zwischen der Mikrorauhigkeit der Felgenoberfläche und der auf der Felgenoberfläche aufsitzenden weichen Gummimischung des Reifenfußes 11 erfolgt. Die radial innere am Reifenfuß 11 angeordnete weiche Gummimischung ist eine äußere, umlaufende Gummiauflage 12, die im Reifenquerschnitt betrachtet wenigstens eine Dicke d von 0,5mm aufweist. Zwischen Kern 6 und der radial unterhalb des Kerns 6 gelegenen Lage 12 aus weicher Gummimischung ist eine härtere Gummimischung als Wulststreifen 13 angeordnet. Durch eine derartige Ausführung des Wulstbereiches ist eine ausreichende Festigkeit des Wulstbereiches gewahrt, es ist aber auch die Reibhaftung und die Einfederung verbessert.

Die **Fig. 2** zeigt eine schematische Vergrößerung der Anordnung der radial innen, korrespondierend zur Felgensitzfläche angeordneten weichen Gummilage 12 der Fig. 1. Gleiche Bauteile sind mit gleichen Bezugsziffern gekennzeichnet.

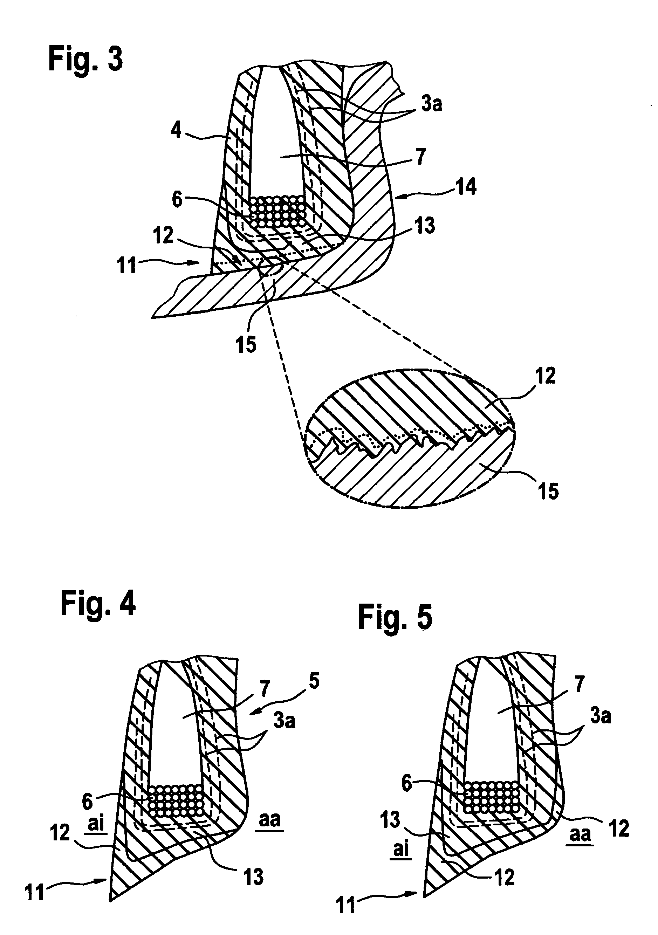

Die **Fig. 3** zeigt einen Querschnitt des auf der Felge 14 angeordneten Wulstbereiches 5 der Fig. 1, 2 und einen vergrößerten Ausschnitt der Auflagefläche zwischen Felgensitz 15 und Gummilage 12. In der schematischen Ausschnittsvergrößerung ist eine Verzahnung der mikrorauhen Felgensitzoberfläche mit der weichen Gummiauflage 12 des radial inneren Reifenfußbereiches 11 zu erkennen.

In der **Fig. 4** ist eine andere Ausführungsform des im Querschnitt dargestellten Wulstbereiches 5 eines PKW-Reifens zu erkennen. Alle Darstellungen zeigen den rechten Wulstbereich eines Reifenquerschnittes, so dass links von der Figuren-Darstellung axial innen ist, während rechts von der Figuren-Darstellung axial außen ist. Die Ausführungsform der Fig. 4 zeigt eine Gummiauflage 12 aus einer weichen Gummimischung radial unterhalb des Wulststreifens 13, die sich radial innen als Fußbereich 11 unterhalb des Kernes 6 nach axial innen bis in eine Höhe erstreckt, die innerhalb der Höhe des Kernprofils 7 liegt und die axial innen gelegene Außenfläche des Wulstbereiches bildet.

In der Ausführungsform der **Fig. 5** ist die aus einer weichen Gummimischung bestehenden Lage 12 im Gegensatz zur Ausführungsform der Fig. 5 auch an der axial äußeren Seite als Außenfläche bis auf einer Höhe angeordnet, die innerhalb der radialen Höhe des Kernprofils 7 liegt.

### Bezugszeichenliste

### (Teil der Beschreibung)

- 1: Laufstreifen
- 2: Gürtel
- 3: Karkasse
- 3a: Karkasshochschlag
- 4: Innenschicht
- 5: Wulst
- 6: Wulstkern
- 7: Wulstkernprofil
- 8: Seitenwand
- 9: Verstärkungsprofil
- 10: Verstärkungsprofil
- 11: Fußbereich
- 12: Weiche Gummilage
- 13: Wulststreifen
- 14: Felge
- 15: Felgensitz

## Patentansprüche

1. Fahrzeugluftreifen mit Notlaufeigenschaften mit einem profilierten Laufstreifen (1), einem Gürtelverband (2), einer luftdicht ausgeführten Innenschicht (4), einer zumindest einlagigen Karkasse (3), Seitenwänden (8) mit zumindest je einem im Bereich jeder Seitenwand (8) eingebrachten, im Querschnitt mondsichelförmigen Verstärkungsprofil (9,10), welches sich jeweils zumindest über einen Großteil der Seitenwandlänge erstreckt, Wulstbereichen (5) mit Wulstkernen (6) und Wulstprofilen (7), wobei wenigstens ein zumindest unterhalb der Wulstkerne (6) angeordneter Wulststreifen den Reifenfuß (11) bildet, welcher im Zusammenspiel mit einer Felgensitzfläche (15) den Sitz des Reifens auf der Felge (14) gewährleistet, **dadurch gekennzeichnet, dass** der Reifenfuß (11) zumindest radial unterhalb des Kernes (6) auf seiner der Felgensitzfläche (15) zugewandten äußeren, auf der Felgensitzfläche (15) aufliegenden Fläche zur Erhöhung der Reibhaftung zwischen Reifenfuß (11) und Felge (14) aus einer weichen Gummimischung besteht, welche eine Shore-A-Härte kleiner 70 aufweist und dass die weiche Gummimischung auf ihrer dem Felgensitz (15) zugewandten Fläche Rauhigkeiten aufweist.

2. Fahrzeugreifen nach Anspruch 1,
**dadurch gekennzeichnet, dass** die außen am Reifenfußbereich (11) angeordnete weiche Gummimischung eine Gummilage (12) ist, die im Querschnitt des Reifens betrachtet wenigstens eine Dicke von etwa 0,5mm bis maximal etwa 2,5mm aufweist.

3. Fahrzeugreifen nach Anspruch 1,
**dadurch gekennzeichnet, dass** der gesamte Reifenfuß (11) aus der weichen Gummimischung besteht.

4. Fahrzeugreifen nach einem der vorangehenden Ansprüche,
**dadurch gekennzeichnet, dass** die Shore-A-Härte der weichen Gummimischung etwa 57 beträgt.

5. Fahrzeugreifen nach Anspruch 1,
**dadurch gekennzeichnet, dass** die Rauhtiefe weniger als 0,5mm beträgt.

6. Fahrzeugreifen nach Anspruch 1 oder 5,
**dadurch gekennzeichnet, dass** die Rauhigkeiten durch geometrische Erhöhungs- und/oder Vertiefungs-Muster der äußeren Gummioberfläche gebildet sind.

7. Fahrzeugreifen nach Anspruch 2,
**dadurch gekennzeichnet, dass** die Lage (12) aus der weichen Gummimischung nur auf der radial äußeren Fläche radial unterhalb des Kernes (6) liegend, angeordnet ist.

8. Fahrzeugreifen nach Anspruch 2,
**dadurch gekennzeichnet, dass** die Lage (12) aus der weichen Gummimischung auf der radial äußeren Fläche unterhalb des Kernes (6) und ein- oder beidseitig axial innen und/oder axial außen an den äußeren Fußbereichen (11) bis in eine radiale Höhe, die im Bereich des Apex (7) liegt, angeordnet ist.

## Claims

1. Run-flat pneumatic vehicle tire, comprising a profiled tread (1), a belt structure (2), an internal layer (4) which is of air-tight design, an at least single-ply carcass (3), side walls (8), each with at least one reinforcing profile (9, 10) which is provided in the region of each side wall (8), is crescent moon shaped in cross section and extends in each case over at least a large part of the side wall length, bead regions (5) with bead cores (6) and bead profiles (7), wherein at least one bead strip which is arranged at least underneath the bead cores (6) forms the bead heel (11) which, by interacting with a rim seat face (15), ensures that the tire is seated on the rim (14),
**characterized in that** the bead heel (11) is composed, at least radially underneath the core (6) on its outer face, which faces the rim seat face (15) and rests on the rim seat face (15), of a soft rubber mixture, which has a Shore A hardness of less than 70, in order to increase the frictional adhesion between the bead heel (11) and the rim (14), and **in that** the soft rubber mixture has rough portions on its face facing the rim seat (15).

2. Vehicle tire according to Claim 1,
**characterized in that** the soft rubber mixture which is arranged on the outside of the bead heel region (11) is a rubber layer (12) which has at least a thickness of approximately 0.5 mm to a maximum of approximately 2.5 mm viewed along the cross section of the tire.

3. Vehicle tire according to Claim 1,
**characterized in that** the entire bead heel (11) is composed of the soft rubber mixture.

4. Vehicle tire according to one of the preceding claims,
**characterized in that** the Shore A hardness of the soft rubber mixture is approximately 57.

5. Vehicle tire according to Claim 1,
**characterized in that** the depth of roughness is less than 0.5 mm.

6. Vehicle tire according to Claim 1 or 5,
**characterized in that** the rough portions are formed by geometric elevation patterns and/or depression patterns on the outer surface of the rubber.

7. Vehicle tire according to Claim 2,
**characterized in that** the layer (12) comprised of the soft rubber mixture is arranged only on the radially outer face, lying radially underneath the core (6).

8. Vehicle tire according to Claim 2,
**characterized in that** the layer (12) comprised of the soft rubber mixture is arranged on the radially outer face underneath the core (6) and on one side or both sides axially on the inside and/or axially on the outside on the outer heel regions (11) as far as a radial height which is in the region of the apex (7).

## Revendications

1. Bandage pneumatique pour roue de véhicule présentant des propriétés de roulage de secours et doté d'une bande de roulement (1) profilée, d'un ensemble de ceinture (2), d'une couche intérieure (4) étanche à l'air, d'une carcasse (3) en au moins une couche, de parois latérales (8) dont au moins une présente un profilé de renfort (9, 10) de section transversale en croissant de lune au niveau de chaque paroi latérale (8), qui s'étend chaque fois au moins sur la plus grande partie de la longueur de la paroi latérale, de zones de bourrelet (5) présentant une âme de bourrelet (6) et un profilé de bourrelet (7), au moins un ruban de bourrelet disposé en dessous de l'âme de bourrelet (6) formant le pied (11) du bandage de roue qui, en coopération avec une surface (15) de siège de jante, assure l'assise du bandage de roue sur la jante (14), **caractérisé en ce que**
sur sa surface extérieure tournée vers la surface (15) du siège de jante et reposant sur la surface (15) du siège de jante, le pied (11) de bandage de roue est constitué au moins radialement en dessous de l'âme (6) d'un mélange de caoutchouc mou destiné à augmenter l'adhérence par frottement entre le pied (11) du bandage de roue et la jante (14) et présentant une dureté Shore A inférieure à 70 et
**en ce que** le mélange de caoutchouc mou présente des rugosités sur sa surface tournée vers le siège de jante (15).

2. Bandage pneumatique pour roue de véhicule selon la revendication 1, **caractérisé en ce que** le mélange de caoutchouc mou disposé à l'extérieur au niveau (11) du pied de bandage de roue est une couche de caoutchouc (12) qui, dans la section transversale du pneu, présente une épaisseur d'environ 0,5 mm jusqu'à au plus environ 2,5 mm.

3. Bandage pneumatique pour roue de véhicule selon la revendication 1, **caractérisé en ce que** la totalité du pied (11) de bandage de roue est constituée du mélange de caoutchouc mou.

4. Bandage pneumatique pour roue de véhicule selon l'une des revendications précédentes, **caractérisé en ce que** la dureté Shore A du mélange de caoutchouc mou est d'environ 57.

5. Bandage pneumatique pour roue de véhicule selon la revendication 1, **caractérisé en ce que** la profondeur de la rugosité est inférieure à 0,5 mm.

6. Bandage pneumatique pour roue de véhicule selon les revendications 1 ou 5, **caractérisé en ce que** la rugosité est formée par un motif géométrique de reliefs et/ou de creux sur la surface extérieure du caoutchouc.

7. Bandage pneumatique pour roue de véhicule selon la revendication 2, **caractérisé en ce que** la couche (12) de mélange de caoutchouc mou n'est disposée que sur la surface radialement extérieure située en dessous de l'âme (6).

8. Bandage pneumatique pour roue de véhicule selon la revendication 2, **caractérisé en ce que** la couche (12) de mélange de caoutchouc mou est disposée sur la surface radialement extérieure, en dessous de l'âme (6) et sur un ou deux côtés axialement intérieurs et/ou axialement extérieurs sur les parties extérieures (11) du pied et jusqu'à une hauteur radiale située au niveau du sommet (7).
